# EUROPEAN PATENT SPECIFICATION

(11) **EP 2 139 815 B1**
(45) Date of publication and mention of the grant of the patent: **09.05.2018**
(21) Application number: 08717686.3
(22) Date of filing: 12.03.2008
(51) Int. Cl.: C01G 25/00, D21H 19/12, D21H 19/64, D21H 21/20, D21H 17/66

(54) **A METHOD OF PREPARATION OF AN AQUEOUS COMPOSITION OF ZIRCONIUM CARBONATE AND AN ALKALINE METAL SALT AND USE THEREOF**
VERFAHREN ZUR HERSTELLUNG EINER WÄSSRIGEN ZUSAMMENSETZUNG VON ZIRCONIUMCARBONAT UND EINEM ALKALIMETALLSALZ UND VERWENDUNG DAVON
PROCÉDÉ DE PRÉPARATION D'UNE COMPOSITION AQUEUSE DE CARBONATE DE ZIRCONIUM ET D'UN SEL MÉTALLIQUE ALCALIN ET SON UTILISATION

(30) Priority: 26.03.2007 FR 0754032
(43) Date of publication of application: 06.01.2010
(73) Proprietor: Archroma IP GmbH, 4153 Reinach (CH)
(72) Inventor: TROUVE, Claude, 75020 Paris (FR)
(74) Representative: Ricker, Mathias
(86) International application number: PCT/EP2008/052940
(87) International publication number: WO 2008/116755

(56) References cited:
- EP-A- 0 004 403
- FR-A- 2 088 550
- GB-A- 1 337 983
- US-A- 4 061 720
- Anne Veyland ET AL: "Aqueous Chemistry of Zirconium(IV) in Carbonate Media", Helvetica Chimica Acta, vol. 83, no. 2, 16 February 2000 (2000-02-16), pages 414-427, XP55169361, ISSN: 0018-019X, DOI: 10.1002/(SICI)1522-2675(20000216)83:2<414: :AID-HLCA414>3.0.CO;2-2

## Description

The present invention relates to a process for the preparation of an aqueous composition of zirconium carbonate and an alkali metal salt and to the use of the said composition as insolubilizing agent in coating baths for paper or board.

Aqueous solutions of zirconium carbonate and of an alkali metal salt, such as, for example, the potassium salt, are available industrially and can be used when there is a need for zirconium soluble in an alkaline medium. This is because it is known that these zirconium salts can be used to render insoluble, in aqueous solution, natural binders, such as starch, casein or carboxymethylcellulose (CMC), or synthetic binders, such as latexes or polyvinyl alcohol, and to form insoluble films, thus improving the resistance to water, to friction, to heat and to solvents.

These zirconium solutions are used in numerous technological fields, in particular in aqueous ink and paint formulations and more particularly in coating baths intended for the coating or impregnation of paper or board in order to improve the appearance, the wet abrasion resistance, the picking, the strength and the ability to receive printing.

Aqueous solutions of potassium zirconium carbonate (KZC) are conventionally prepared by heating an aqueous solution of basic zirconium carbonate (BZC) with a potassium carbonate solution with a carbonate to zirconium molar ratio of less than or equal to 2, as described in US 4 061 720 or FR-A-2 156 879.

FR-A-2 088 550 mentions that BZC can be replaced by zirconium oxychloride (ZrOCl₂) and that it is possible to use a solution of potassium bicarbonate in the presence of potassium hydroxide.

The paper "Aqueous Chemistry of Zirconium(IV) in Carbonate Media", Helvetica Chimica Acta, 83, 414-427, (2000), teaches that these solutions can be obtained by addition of a ZrOCl₂ solution to a solution comprising potassium carbonate and potassium bicarbonate or only potassium carbonate.

However, the use of these aqueous solutions of zirconium carbonate and an alkali metal salt as insolubilizing agent, also known as crosslinking agent, does not give satisfactory results, particularly as regards the resistance of the coating to wet rub. Surprisingly, the Applicant Company has found that the use of bicarbonates in place of carbonates with a bicarbonate to zirconium molar ratio at least equal to 4 in the preparation of the said solutions makes it possible to obtain aqueous of zirconium carbonates and an alkali metal salt which are more effective than commercial solutions. The subject-matter of the present invention is thus a process for the preparation of an aqueous composition of zirconium carbonate and an alkali metal salt, characterized by the reaction, in the aqueous phase, of a zirconium compound and an alkali metal bicarbonate with a bicarbonate to zirconium molar ratio equal to or greater than 4:1. The term "zirconium compound" denotes basic zirconium carbonate, also known as BZC or ZBC, zirconium oxychloride (ZrOCl₂), also known as ZOC, and basic zirconium sulphate, also known as BZS, basic zirconium carbonate being preferred.
The term "alkali metal salt" denotes the potassium or sodium salt, the potassium salt being preferred.

The term "alkali metal bicarbonate", denotes sodium bicarbonate or potassium bicarbonate, potassium bicarbonate being preferred.
According to a preferred aspect, the present invention is targeted at a process for the preparation of an aqueous potassium zirconium carbonate composition, characterized by the reaction, in the aqueous phase, between a zirconium compound and potassium bicarbonate with a bicarbonate to zirconium molar ratio equal to or greater than 4:1. The bicarbonate to zirconium molar ratio is equal to or greater than 4:1, in particular between approximately 4:1 and approximately 6:1.
Preferably, the said molar ratio is equal to approximately 4:1.
The basic zirconium carbonate, the zirconium oxychloride and the basic zirconiuim sulphate which can be used according to the invention are commercial products generally available in the solid and hydrate form. Advantageously, the basic zirconium carbonate will be used in the powder form as sold by Astron.

Typically, the zirconium compound is added to an aqueous solution of alkali metal bicarbonate.

The reaction of the zirconium compound with the alkali metal bicarbonate can be carried out at ambient temperature but it is facilitated by heating.

According to a preferred embodiment, after having added the various ingredients at ambient temperature, the solution obtained is brought with stirring to a temperature of between 30 and 80°C, preferably to 70°C, for 1 h to 24 h, preferably 4 h.

The stability of the solutions of zirconium carbonate and an alkali metal salt obtained according to the process of the invention can be improved by the addition of a stabilizing agent as described in FR-A-2 088 550. Mention may be made, by way of example, of tartaric acid or gluconic acid, which is advantageously added in the proportion of 1 to 2% approximately with respect to the weight of the final solution. The tartaric or gluconic acid can be added before or after the reaction between the zirconium compound and the alkali metal bicarbonate, preferably before the reaction.

The aqueous composition of zirconium carbonate and an alkali metal salt obtained is stable over time and preferably has a concentration of 10 to 12% approximately by weight of zirconium, expressed as ZrO₂, and a high solids content of 50 to 55% approximately. The aqueous composition of zirconium carbonate and an alkali metal salt obtained has a pH of greater than 8 and less than 10, particularly of between 8.5 and 9.6 approximately.

The compositions obtained according to the invention exhibit advantageous properties when they are introduced into compositions for the treatment of cellulose-based products, in particular into coating baths.

They make it possible in particular to improve the wet abrasion resistance, the wet pick resistance and the inertia with regard to water of the substrates treated, such as paper or board, such as, for example, paper of the type for the printing of writing, newsprint, recycled paper, wrapping paper, paper of test liner type, the backing for self-adhesive labels or board in the flat.

Another subject-matter of the invention is thus the use of an aqueous composition of zirconium carbonate and an alkali metal salt obtained by the process described above as insolubilizing agent in an aqueous composition for the treatment of a cellulose-based product, preferably paper or board.

In the present invention, the coating bath can be:
- either deposited at the surface over the cellulose-based product in one or more layers while limiting the penetration inside the surface to be treated, an operation commonly known as coating;
- or brought into contact with the cellulose-based product with the objective of obtaining penetration inside the cellulose-based product in one or more stages, an operation commonly known as impregnation.

In particular, another subject-matter of the invention is a method for treating a cellulose-based product, preferably paper or board, in which a coating bath comprising at least one binder, an insolubilizing agent and optionally a pigment is applied at the surface of the said cellulose-based product, characterized in that the insolubilizing agent is an aqueous composition of zirconium carbonate and an alkali metal salt obtained according to the process described above.

According to another aspect, the invention is also targeted at a method for treating a cellulose-based product, preferably paper or board, in which a coating bath comprising at least one binder, an insolubilizing agent and optionally a pigment is brought into contact with the said cellulose-based product, characterized in that that insolubilizing agent is an aqueous composition of zirconium carbonate and an alkali metal salt obtained according to the process described above.

According to a preferred aspect for implementing the invention, the insolubilizing agent is an aqueous potassium zirconium carbonate composition obtained according to the process described above.

A coating bath is an aqueous mixture comprising at least one binder, an insolubilizing agent and optionally a pigment as well as, optionally, functional additives. Generally, the pigments used are chosen from kaolin, calcium carbonate, titanium dioxide and their mixtures. Other pigments, such as alumina hydrate, satin white, silicates or synthetic pigments, can also be used for specific applications.

The binders can be of natural or synthetic origin. Mention may be made, among natural binders, of starch, modified starch (for example oxidized or modified by enzymes), soy protein and casein.

More commonly, use is made of synthetic binders, such as styrene/butadiene latexes, polyvinyl acetate latexes, acrylate latexes or polyvinyl alcohol.

According to a preferred aspect, the binders used in the present invention can be chosen from functionally modified latexes, for example latexes modified with hydroxyl groups, particularly with carboxyl groups, in particular sodium carboxylate groups. Mention may be made, by way of example, of the styrene/butadiene DL 950 latex sold by DOW.

The coating baths which can be used in the present invention can also comprise additives, such as dispersants, viscosity modifiers (carboxymethylcellulose or hydroxyethylcellulose, for example), lubricating agents, bactericides, pH control agents, repellants, gloss agents, dyes or antifoaming agents.

The pH of the said coating baths is generally between 7 and 9, preferably between 7 and 8.6.

Generally, the amount of insolubilizing agent of the present invention in the coating bath is between 1 and 20 parts as is per 100 parts of binder under dry conditions, preferably between 3 and 15 parts as is per 100 parts of binder under dry conditions.

The coating bath is applied by methods known per se. Mention may be made, by way of example, of the process with an applicator roll, size press or premetering size press.

### Example 1

Preparation of a potassium zirconium carbonate solution comprising 11% by weight of dry ZrO₂ with regard to the solution as is and 4 mol of bicarbonate per mole of zirconium.

11 g of tartaric acid are added to 357 g of water with stirring and at ambient temperature. Subsequently, 390 g of potassium bicarbonate are added, followed by 299 g of basic zirconium carbonate (40% ZrO₂; Astron). When the addition is complete, the solution is heated at 70°C for 5 h.

1057 g of a clear colourless solution having a pH of approximately 9.3, a solids content of 53.7% and an NTU turbidity of 7 are obtained.

### Comparative Example 1

Preparation of a potassium zirconium carbonate solution comprising 10% by weight of dry ZrO₂ with regard to the solution as is and 4 mol of carbonate per mole of zirconium.

5.5 g of tartaric acid are added to 178.5 g of water with stirring and at ambient temperature. Subsequently, 250 g of potassium carbonate are added, followed by 140 g of basic zirconium carbonate (40% ZrO₂; Astron). When the addition is complete, the solution is heated at 70 °C for 24 h.

574 g of a clear orange solution having a pH of approximately 13.24, a solids content of 59.17% and an NTU turbidity of 15 are obtained.

### Application Examples

Use was made of a calcium carbonate sold by Omya (Hydrocarb® 90), a kaolin sold by Huber Engineered Materials (Hydragloss®), a styrene/butadiene latex sold by Dow (DL 950), and carboxymethylcellulose (CMC) sold by Noviant (Finfix® 10).

Various formulations C1 to C4 were prepared, the compositions of which are given in Table 1 below. The amounts are given as dry parts.

The formulation C1 does not comprise an insolubilizing agent. The formulation C2 corresponds to the use of an insolubilizing composition as prepared according to the invention (Example 1). The formulation C3 corresponds to the use of an insolubilizing composition as described in Comparative Example 1. The formulation C4 corresponds to the use of a commercial aqueous potassium zirconium carbonate solution comprising 19.5% of dry ZrO₂ with regard to the solution as is, a solids content of 50% and a pH of 11 -11.5.

**Table 1**

| | C1 | C2 | C3 | C4 |
|---|---|---|---|---|
| calcium carbonate | 50 | 50 | | |
| kaolin | 50 | 50 | 50 | 50 |
| latex | 10 | 10 | 10 | 10 |
| CMC | 0.35 | 0.35 | 0.35 | 0.35 |
| insolubilizing agent (Example 1) | | 1.2 | | |
| insolubilizing agent (Comparative Example 1) | | | 1.5 | |
| insolubilizing agent (commercial product) | | | | 0.65 |

In the examples, use was made of uncoated paper exhibiting a grammage of 80 g/m². The paper was coated with the formulations C1 to C4 with a deposition of approximately 26 g/m² using a threaded rod, followed by oven drying at 105°C in an oven for 2 minutes.

The Taber wet abrasion was subsequently determined on the coated paper. The Taber wet abrasion was carried out according to amended French Standard Q 03-055, with annular test specimens with outer and inner diameters of 120 and 7 mm respectively, with 10 revolutions, CS O wheels, under a pressure of 1N, in the presence of 10 ml of water, followed by rinsing with 10 ml of water; these 20 ml of water are collected and made up to 25 ml with water and then the turbidity of these 25 ml of water is determined with a Hach turbidimeter. The turbidity found is expressed in NTU units (the lower the turbidity values, the better the resistance) and the results obtained are reported in Table 2 below.

**Table 2**

| | C1 | C2 | C3 | C4 |
|---|---|---|---|---|
| Turbidity (NTU) | 277 | 182 | 245 | 265 |

The analysis of the results mentioned in Table 2 shows that, with respect to the coating slips prepared according to the techniques of the prior art, with an equivalent dose of ZrO₂, the insolubilizing composition prepared according to the invention makes it possible to obtain a coated paper exhibiting a better wet abrasion resistance.

## Claims

1. Process for the preparation of an aqueous composition of zirconium carbonate and an alkali metal salt, **characterized in that** it comprises a stage consisting of reacting, in the aqueous phase, a zirconium compound and an alkali metal bicarbonate with a bicarbonate to zirconium molar ratio equal to or greater than 4:1, wherein the zirconium compound is chosen from basic zirconium carbonate, zirconium oxychloride (ZrOCI2) and basic zirconium sulphate.

2. Process according to Claim 1, **characterized in that** the alkali metal bicarbonate is chosen from potassium bicarbonate and sodium bicarbonate.

3. Process according to any one of Claims 1 or 2, **characterized in that** the bicarbonate to zirconium molar ratio is between approximately 4:1 and approximately 6:1.

4. Process according to any one of Claims 1 to 3, **characterized in that** the bicarbonate to zirconium molar ratio is approximately 4:1.

5. Process according to any one of Claims 1 to 4, **characterized in that** it comprises the addition of a stabilizing agent.

6. Use of an aqueous composition of zirconium carbonate and an alkali metal salt obtained by the process according to any one of Claims 1 to 5 as insolubilizing agent in an aqueous composition for the treatment of a cellulose-based product.

7. Use according to Claim 6, **characterized in that** the cellulose-based product is chosen from paper and board.

8. Use according to either of Claims 6 and 7, **characterized in that** the said treatment composition is a coating bath.

9. Use according to Claim 8, **characterized in that** the coating bath is intended for the impregnating or coating of paper or board.

10. Use according to any one of Claims 6 to 9, **characterized in that** the said aqueous composition of zirconium carbonate and an alkali metal salt has a concentration of approximately 10 to 12% by weight of zirconium, expressed as ZrO₂, and/or a solids content of 50 to 55%.

11. Use according to any one of Claims 6 to 10, **characterized in that** the said aqueous composition of zirconium carbonate and an alkali metal salt has a pH of greater than 8 and less than 10, preferably of between approximately 8.5 and 9.6.

12. Method for the treatment of a cellulose-based product, in which a coating bath comprising at least one binder, an insolubilizing agent and optionally a pigment is applied at the surface of the said cellulose-based product, **characterized in that** the insolubilizing agent is an aqueous composition of zirconium carbonate and an alkali metal salt obtained according to the process according to any one of Claims 1 to 5.

13. Method for the treatment of a cellulose-based product in which a coating bath comprising at least one binder, an insolubilizing agent and optionally a pigment is brought into contact with the said cellulose-based product, **characterized in that** that insolubilizing agent is an aqueous composition of zirconium carbonate and an alkali metal salt obtained according to the process according to any one of Claims 1 to 5.

14. Method according to Claim 12 or Claim 13, **characterized in that** the cellulose- based product is chosen from paper and board.

15. Method according to any one of Claims 12 to 14, **characterized in that** the said aqueous composition of zirconium carbonate and an alkali metal salt has a concentration from approximately 10 to 12% by weight of zirconium, expressed as ZrO₂, and/or a solids content of 50 to 55%.

16. Method according to any one of Claims 12 to 15, **characterized in that** the said aqueous composition of zirconium carbonate and an alkali metal salt has a pH of greater than 8 and less than 10, preferably of between approximately 8.5 and 9.6.

## Patentansprüche

1. Verfahren zur Herstellung einer wässrigen Zusammensetzung aus Zirkoniumcarbonat und einem Alkalimetallsalz, **dadurch gekennzeichnet, dass** es einen Schritt aufweist bestehend aus der Reaktion, in der wässrigen Phase, einer Zirkonverbindung und einem Alkalimetallbicarbonat mit einem molarem Bicarbonat zu Zirkonium Verhältnis von gleich oder größer 4:1, wobei die Zirkonverbindung ausgewählt wird aus basischem Zirkoncarbonat, Zirkonoxychlorid (ZrOCl₂) und basischem Zirkonsulphat.

2. Verfahren gemäß Anspruch 1, **dadurch gekennzeichnet, dass** das Alkalimetallbicarbonat ausgewählt wird aus Kaliumbicarbonat und Natriumbicarbonat.

3. Verfahren gemäß einem der Ansprüche 1 oder 2, **dadurch gekennzeichnet, dass** das molare Verhältnis Bicarbonat zu Zirkon zwischen ungefähr 4:1 und ungefähr 6:1 liegt.

4. Verfahren gemäß einem der Ansprüche 1 bis 3, **dadurch gekennzeichnet, dass** das molare Verhältnis Bicarbonat zu Zirkon ungefähr 4:1 ist.

5. Verfahren gemäß einem der Ansprüche 1 bis 4, **dadurch gekennzeichnet, dass** es die Zugabe eines Stabilisators aufweist.

6. Verwendung einer wässrigen Zusammensetzung aus Zirkoncarbonat und einem Alkalimetallsalz, erhalten durch ein Verfahren gemäß einem der Ansprüche 1 bis 5, als Insolubilisierungsmittel in einer wässrigen Zusammensetzung zur Behandlung eines Zellulose-basierten Produktes.

7. Verwendung gemäß Anspruch 6, **dadurch gekennzeichnet, dass** das Zellulose-basierte Produkt ausgewählt wird aus Papier und Karton.

8. Verwendung gemäß einem der Ansprüche 6 und 7, **dadurch gekennzeichnet, dass** die besagte Behandlungszusammensetzung ein Beschichtungsbad ist.

9. Verwendung gemäß Anspruch 8, **dadurch gekennzeichnet, dass** das Beschichtungsbad bestimmt ist zur Imprägnierung oder Beschichtung von Papier oder Karton.

10. Verwendung gemäß einem der Ansprüche 6 bis 9, **dadurch gekennzeichnet, dass** die besagte wässrige Zusammensetzung aus Zirkoncarbonat und einem Alkalimetallsalz eine Konzentration von ungefähr 10 bis 12 Gew.-% Zirkon, ausgedrückt in ZrO₂, und/oder einen Feststoffgehalt von 50 bis 55 % hat.

11. Verwendung gemäß einem der Ansprüche 6 bis 10, **dadurch gekennzeichnet, dass** die besagte wässrige Zusammensetzung aus Zirkoniumcarbonat und einem Alkalimetallsalz einen pH von höher als 8 und geringer als 10 hat, bevorzugt zwischen ungefähr 8,5 und 9,6.

12. Verfahren zur Behandlung eines Zellulose-basierten Produkts, in welchem ein Beschichtungsbad, aufweisend mindestens ein Bindemittel, ein Insolubilisierungsmittel und optional ein Pigment, auf die Oberfläche des Zellulose-basierten Produkts aufgebracht wird, **dadurch gekennzeichnet, dass** das Insolubilisierungsmittel eine wässrige Zusammensetzung aus Zirkoniumcarbonat und einem Alkalimetallsalz, hergestellt nach dem Verfahren gemäß einem der Ansprüche 1 bis 5, ist.

13. Verfahren zur Behandlung eines Zellulose-basierten Produkts, in welchem ein Beschichtungsbad, aufweisend mindestens ein Bindemittel, ein Insolubilisierungsmittel und optional ein Pigment, in Kontakt gebracht wird mit dem besagten Zellulose-basierten Produkt, **dadurch gekennzeichnet, dass** das Insolubilisierungsmittel eine wässrige Zusammensetzung aus Zirkoncarbonat und einem Alkalimetallsalz, hergestellt nach dem Verfahren gemäß einem der Ansprüche 1 bis 5, ist.

14. Verfahren gemäß Anspruch 12 oder Anspruch 13, **dadurch gekennzeichnet, dass** das Zellulose-basierte Produkt ausgewählt wird aus Papier und Karton.

15. Verfahren gemäß einem der Ansprüche 12 bis 14, **dadurch gekennzeichnet, dass** die besagte wässrige Zusammensetzung aus Zirkoncarbonat und einem Alkalimetallsalz eine Konzentration von ungefähr 10 bis 12 Gew.-% Zirkon, ausgedrückt in ZrO₂, und/oder einen Feststoffgehalt von 50 bis 55 % hat.

16. Verfahren gemäß einem der Ansprüche 12 bis 15, **dadurch gekennzeichnet, dass** die besagte wässrige Zusammensetzung aus Zirkoncarbonat und einem Alkalimetallsalz einen pH von höher als 8 und geringer als 10 hat, bevorzugt zwischen ungefähr 8,5 und 9,6.

## Revendications

1. Procédé pour la préparation d'une composition aqueuse de carbonate de zirconium et d'un sel de métal alcalin, **caractérisé en ce qu'**il comprend une étape consistant à faire réagir, dans la phase aqueuse, un composé de zirconium et un bicarbonate de métal alcalin avec un rapport molaire bicarbonate à zirconium supérieur ou égal à 4 : 1, où le composé de zirconium est choisi parmi du carbonate de zirconium basique, de l'oxychlorure de zirconium (ZrOCl₂) et du sulfate de zirconium basique.

2. Procédé selon la revendication 1, **caractérisé en ce que** le bicarbonate de métal alcalin est choisi parmi le bicarbonate de potassium et le bicarbonate de sodium.

3. Procédé selon l'une quelconque des revendications 1 ou 2, **caractérisé en ce que** le rapport molaire bicarbonate à zirconium est d'approximativement 4 : 1 à approximativement 6 : 1.

4. Procédé selon l'une quelconque des revendications 1 à 3, **caractérisé en ce que** le rapport molaire bicarbonate à zirconium est d'approximativement 4 : 1.

5. Procédé selon l'une quelconque des revendications 1 à 4, **caractérisé en ce qu'**il comprend l'addition d'un agent stabilisant.

6. Utilisation d'une composition aqueuse de carbonate de zirconium et d'un sel de métal alcalin obtenue par le procédé selon l'une quelconque des revendications 1 à 5 comme un agent insolubilisant dans une composition aqueuse pour le traitement d'un produit à base de cellulose.

7. Utilisation selon la revendication 6, **caractérisée en ce que** le produit à base de cellulose est choisi parmi du papier et du carton.

8. Utilisation selon l'une quelconque des revendications 6 et 7, **caractérisée en ce que** ladite composition de traitement est un bain de revêtement.

9. Utilisation selon la revendication 8, **caractérisée en ce que** le bain de revêtement est destiné à l'imprégnation ou au revêtement de papier ou de carton.

10. Utilisation selon l'une quelconque des revendications 6 à 9, **caractérisée en ce que** ladite composition aqueuse de carbonate de zirconium et d'un sel de métal alcalin présente une concentration d'approximativement 10 à 12 % en masse de zirconium, exprimée comme ZrO₂, et/ou une teneur en solides de 50 à 55 %.

11. Utilisation selon l'une quelconque des revendications 6 à 10, **caractérisée en ce que** ladite composition aqueuse de carbonate de zirconium et d'un sel de métal alcalin présente un pH supérieur à 8 et inférieur à 10, de préférence d'approximativement 8,5 à 9,6.

12. Procédé pour le traitement d'un produit à base de cellulose, dans lequel un bain de revêtement comprenant au moins un liant, un agent insolubilisant et éventuellement un pigment est appliqué à la surface dudit produit à base de cellulose, **caractérisé en ce que** l'agent insolubilisant est une composition aqueuse de carbonate de zirconium et d'un sel de métal alcalin obtenue selon le procédé selon l'une quelconque des revendications 1 à 5.

13. Procédé pour le traitement d'un produit à base de cellulose dans lequel un bain de revêtement comprenant au moins un liant, un agent insolubilisant et éventuellement un pigment est mis en contact avec ledit produit à base de cellulose, **caractérisé en ce que** ledit agent insolubilisant est une composition aqueuse de carbonate de zirconium et d'un sel de métal alcalin obtenue selon le procédé selon l'une quelconque des revendications 1 à 5.

14. Procédé selon la revendication 12 ou la revendication 13, **caractérisé en ce que** le produit à base de cellulose est choisi parmi du papier et du carton.

15. Procédé selon l'une quelconque des revendications 12 à 14, **caractérisé en ce que** ladite composition aqueuse de carbonate de zirconium et d'un sel de métal alcalin présente une concentration d'approximativement 10 à 12 % en masse de zirconium, exprimée comme ZrO₂, et/ou une teneur en solides de 50 à 55 %.

16. Procédé selon l'une quelconque des revendications 12 à 15, **caractérisé en ce que** ladite composition aqueuse de carbonate de zirconium et d'un sel de métal alcalin présente un pH supérieur à 8 et inférieur à 10, de préférence d'approximativement 8,5 à 9,6.
